# EUROPÄISCHE PATENTSCHRIFT

(11) **EP 1 060 934 B1**
(45) Veröffentlichungstag und Bekanntmachung des Hinweises auf die Patenterteilung: **02.11.2006**
(21) Anmeldenummer: 00110473.6
(22) Anmeldetag: 17.05.2000
(51) Int. Cl.: B60K 11/08, B60K 13/02

(54) **Fahrzeug mit einer Luftführungshutze**
Vehicle with an inlet of air circulation
Véhicule avec entrée de passage d'air

(30) Priorität: 12.06.1999 DE 19926862
(43) Veröffentlichungstag der Anmeldung: 20.12.2000
(73) Patentinhaber: Dr.Ing. h.c.F. Porsche Aktiengesellschaft, 70435 Stuttgart (DE)
(72) Erfinder: Keller, Markus, 70794 Filderstadt (DE); Reichling, Hermann, 70173 Stuttgart (DE)

(56) Entgegenhaltungen:
- GB-A- 2 303 597
- US-A- 4 406 489
- US-A- 4 883 139
- US-A- 5 042 603
- US-A- 5 794 733

## Beschreibung

Die Erfindung betrifft ein Fahrzeug mit einer Luftführungshutze gemäß dem Oberbegriff des Patentanspruchs 1.

Aus der DE 37 01 736 C2 geht ein Fahrzeug mit einer Luftführungshutze hervor, die von der Fahrzeugaußenseite her in eine Öffnung eines Karosserieaußenhautteiles eingesetzt ist und sich über einen umlaufenden Kragenabschnitt an der Außenseite des Karosserieaußenhautteiles abstützt. Vom Kragenabschnitt der Luftführungshutze ist ein nach innen ragender rohrförmiger Stutzenabschnitt weggeführt ist, der an seinem freien Ende über zusätzliche Befestigungsmittel (schraubbare Befestigungsschelle) mit dem angrenzenden geschlossenen Kanal verbunden ist.

Aufgabe der Erfindung ist es, die Montage der Luftführungshutze und deren Anbindung an den Kanal und an das Karosserieaußenhautteil weiter zu vereinfachen.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile sind darin zu sehen, daß durch die Steckverbindung zwischen dem freien Ende des Stutzenabschnitts und einem aufgeweiteten Aufnahmeabschnitt des angrenzenden Kanals eine einfache und schnelle Montage der Luftführungshutze erzielt wird. Ein außenseitig am Stutzenabschnitt vorgesehener Dichtkörper sorgt für eine dichte Verbindung zum außenliegenden Aufnahmeabschnitt des Kanals.

Die lediglich am Karosserieaußenhautteil festlegbare Luftführungshutze läßt sich ohne Hilfswerkzeug schnell und einfach von der Fahrzeugaußenseite her befestigen und auch wieder demontieren. Eine erste stufenförmige Einprägung an dem die Öffnung umgebenden Karosserieaußenhautteil gewährleitet, daß der örtlich an der stufenförmigen Einprägung aufliegende Kragenabschnitt annähernd außenhautbündig zum angrenzenden Karosserieaußenhautteil verläuft.

Vorteilhafterweise wird die Luftführungshutze bei der Montage durch örtlich vorgesehene, sich an einer zweiten stufenförmigen Einprägung abstützende Fixiernasen lagerichtig positioniert, so daß umlaufend ein konstantes Spaltmaß zwischen dem Rand der Luftführungshutze und dem Karosserieaußenhautteil erzielt wird.

Ein verdecktes Befestigungskonzept für die Luftführungshutze wird dadurch erzielt, daß die Luftführungshutze durch zumindest ein sich an der Innenseite des Karosserieaußenhautteiles abstützendes Federelement und mehrere sich entlang des Kragenabschnitts erstreckende Schnappverbindungen am Karosserieaußenhautteil in Lage gehalten ist. Zur Montage wird die Luftführungshutze schräg in die Öffnung des Karosserieaußenhautteiles eingesetzt, wobei durch die Federelemente eine Vorfixierung der Luftführungshutze geschaffen wird. Durch seitliches Andrücken des vorne liegenden Bereichs der Luftführungshutze in Richtung Karosserieaußenhautteil erfolgt die Festlegung der Luftführungshutze am Karosserieaußenhautteil. Damit sich die Befestigungen nicht an der Außenseite des Kragenabschnitts der Luftführungshutze abzeichnen, sind die Haltenasen der Schnappverbindungen an einer separaten Halteleiste ausgebildet, die durch Ultraschallschweißung mit der Rückseite des Kragenabschnitts verbunden ist. Die Halteklammern der Schnappverbindungen sind auf zungenförmige Anformungen des Karosserieaußenhautteiles aufgesteckt.

Ein Ausführungsbeispiel der Erfindung ist in der Zeichnung dargestellt und wird im folgenden näher beschrieben.

Es zeigen
- Fig. 1: eine perspektivische Teilansicht von schräg vorne auf einen Personenkraftwagen mit einer in eine Öffnung eines Karosserieaußenhautteils eingesetzten Luftführungshutze,

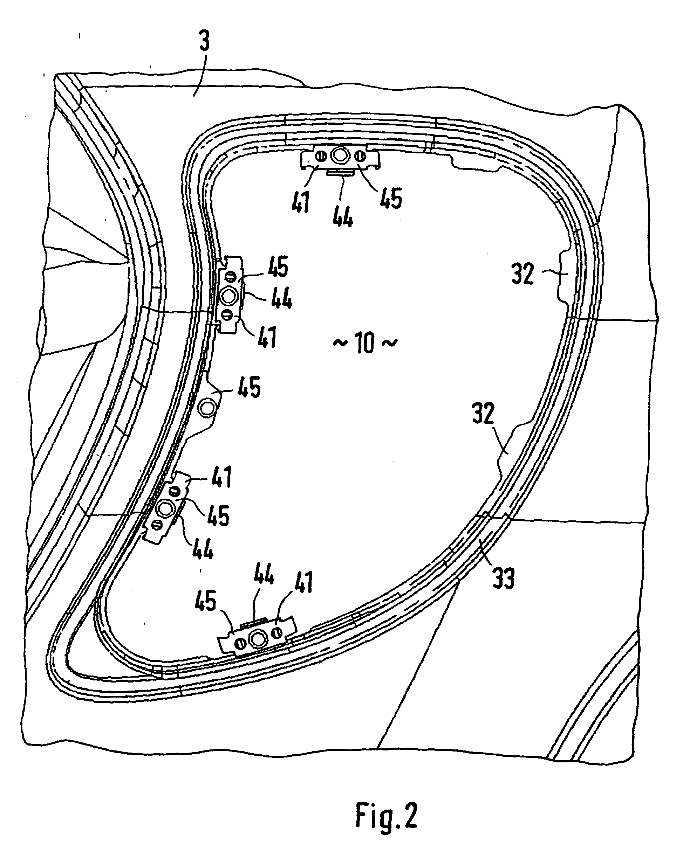

- Fig. 2: eine Teilseitenansicht auf das Karosserieaußenhautteil mit der vorgesehenen Öffnung, jedoch ohne eingesetzte Luftführungshutze,

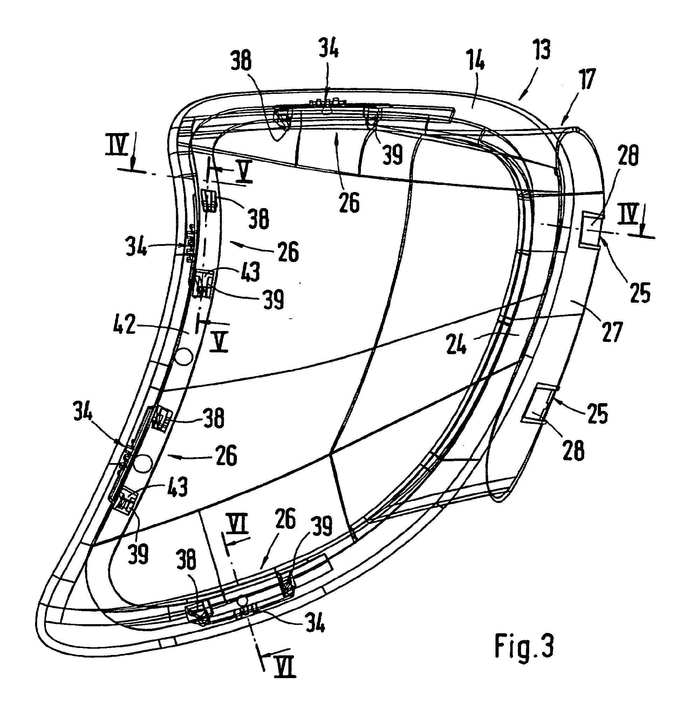

- Fig. 3: eine Teilseitenansicht auf das Karosserieaußenhautteil mit der eingesetzten Luftführungshutze,
- Fig. 4: einen Schnitt nach der Linie IV-IV der Fig. 3 in größerer Darstellung,
- Fig. 5: einen Schnitt nach der Linie V-V der Fig. 3 in größerer Darstellung,
- Fig. 6: einen Schnitt nach der Linie VI-VI der Fig. 3 in größerer Darstellung und
- Fig. 7: eine perspektivische Ansicht von hinten auf die Luftführungshutze.

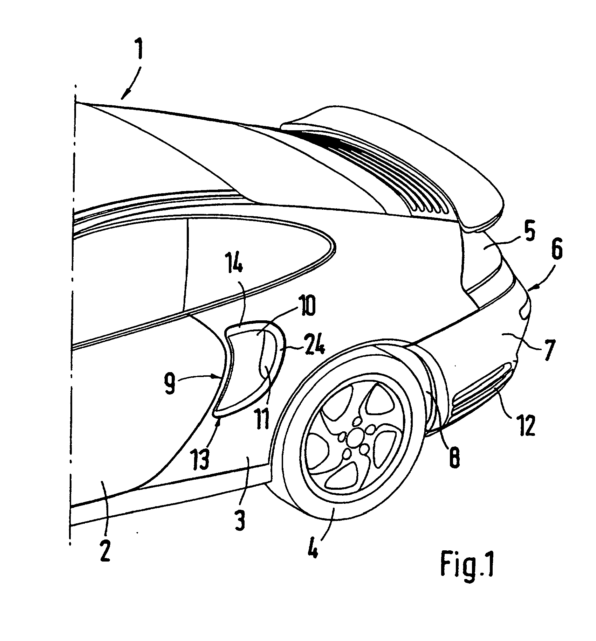

Der in Fig. 1 dargestellte Heckbereich eines Fahrzeuges 1 umfaßt seitliche Türen 2, ein dahinterliegend angeordnetes feststehendes Karosserieaußenhautteil 3, Räder 4, heckseitige Leuchteneinheiten 5 und ein äußeres Verkleidungsteil 6 für einen nicht näher gezeigten Stoßfänger. Das Verkleidungsteil 6 ist mit seitlichen Abschnitten 7 bis an angrenzende hintere Radhäuser 8 herangeführt. Benachbart dem aufrechten hinteren Rand 9 der Tür 2 ist am Karosserieaußenhautteil 3 eine Öffnung 10 angeordnet, durch die Luft über einen daran anschließenden geschlossenen Kanal 11 zu einem nicht näher dargestellten Kühler geführt wird. Der Austritt der durch den Kühler hindurchgeführten Luft erfolgt über am Verkleidungsteil 6 angeordnete seitliche Austrittsschlitze 12. Das Karosserieaußenhautteil 3 wird im Ausführungsbeispiel durch ein hinteres Seitenteil gebildet.

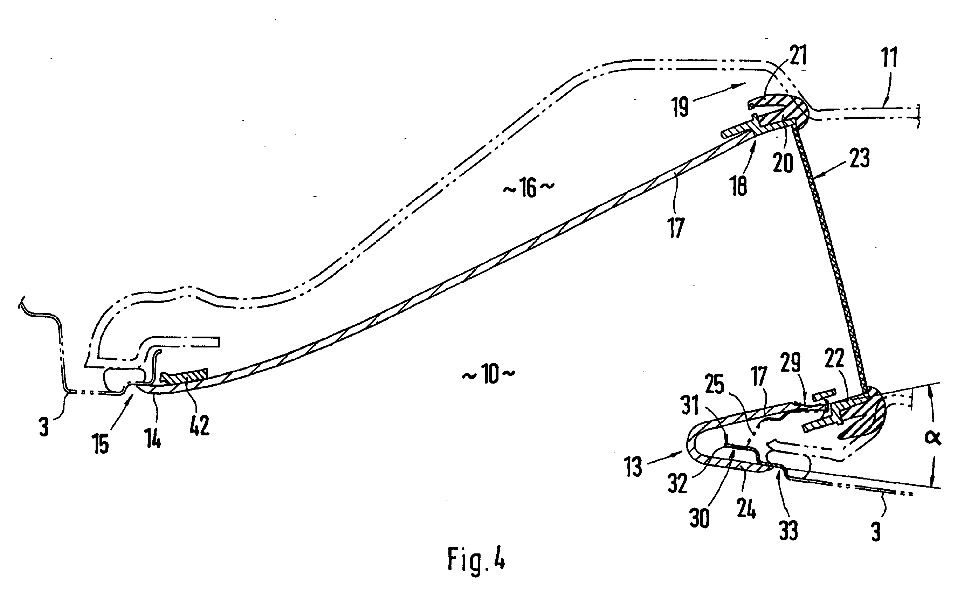

Von der Fahrzeugaußenseite her ist eine Luftführungshutze 13 in die Öffnung 10 des Karosserieaußenhautteils 3 eingesetzt, wobei sich die Luftführungshutze 13 über einen umlaufenden Kragenabschnitt 14 an der Außenseite 15 des Karosserieaußenhautteils 3 abstützt. Vom Kragenabschnitt 14 ist ein in den dahinterliegenden Karosseriehohlraum 16 ragender rohrförmiger Stutzenabschnitt 17 weggeführt, der mit seinem freien Ende 18 an den langgestreckten geschlossenen Kanal 11 angeschlossen ist (Fig. 4).

Erfindungsgemäß ist das freie Ende 18 des Stutzenabschnitts 17 der Luftführungshutze 13 in einen aufgeweiteten, endseitigen Aufnahmeabschnitt 19 des angrenzenden Kanals 11 eingesteckt, wobei zwischen dem Stutzenabschnitt 17 und dem weiter außenliegenden Aufnahmeabschnitt 19 ein umlaufender Dichtkörper 20 zwischengeschaltet ist, so daß der Stutzenabschnitt 17 mit seinem freien Ende 18 dicht an den Kanal 11 angeschlossen ist. Der zumindest eine umlaufende Dichtlippe 21 aufweisende Dichtkörper 20 ist entweder direkt an der Außenseite des freien Endes 18 des Stutzenabschnitts 17 angeordnet oder wie im Ausführungsbeispiel an das Halteprofil 22 eines endseitigen Lufteinlaßgitters 23 angeschäumt, das auf das freie Ende 18 des Stutzenabschnitts 17 aufgesetzt ist. Angrenzend an den Dichtkörper 20 verengt sich Kanal 11 in Richtung Kühler. Der aufrechte, rohrförmige Stutzenabschnitt 17 der Luftführungshutze 13 ist etwa spitzwinkelig (Winkel α) an den hinteren aufrechten Bereich 24 des Kragenabschnitts 14 angeschlossen (Fig. 4).

Ein verdecktes Befestigungskonzept für die Luftführungshutze 13 wird dadurch erzielt, daß diese über zumindest ein Federelement 25 und wenigstens eine Schnappverbindung 26 lösbar am Karosserieaußenhautteil 3 in Lage gehalten.

Im Ausführungsbeispiel sind an einem aufrechten äußeren Wandabschnitt 27 des rohrförmigen Stutzenabschnitts 17 zwei übereinanderliegend angeordnete mit Abstand zueinander verlaufende trapezförmige Aufnahmen 28 ausgebildet, an denen endseitige Befestigungsabschnitte 29 der beiden Federelemente 25 festlegbar sind. Jedes Federelement 25 umgreift mit einem U-förmigen Befestigungsabschnitt 29 das freie Ende des aufrechten Wandabschnitts 27 und stützt sich mit seinem freien abgebogenen Ende 30 federnd an der Innenseite 31 eines zungenartigen Vorsprunges 32 des Karosserieaußenhautteiles 3 unter Vorspannung ab.

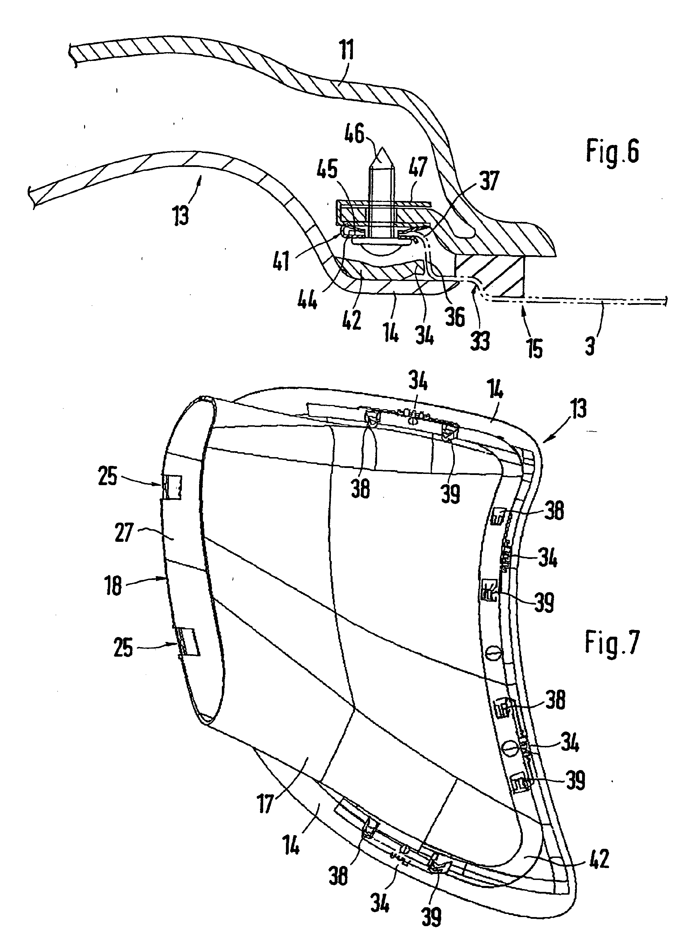

Der Kragenabschnitt 14 der Luftführungshutze 13 liegt an einem parallel dazu verlaufenden Abschnitt einer ersten umlaufenden stufenförmigen Einprägung 33 des die Öffnung 10 umgebenden Karosserieaußenhautteiles 3 abschnittsweise mit seinem freien Ende auf. Zur lagerichtigen Positionierung der Luftführungshutze 13 sind an dieser örtlich vorstehende Fixiernasen 34 angeordnet, die sich mit ihren freien Enden 35 an einem querverlaufenden Flansch 36 einer zweiten stufenförmigen Einprägung 37 der Karosserieaußenhaut 3 abstützen (Fig. 6). Die Fixiernasen 34 sind örtlich an einer inneren Halteleiste 42 ausgebildet.

Im Ausführungsbeispiel sind vier beabstandet angeordnete Fixiernasen 34 im vorderen, oberen und unteren Randbereich der Luftführungshutze 13 vorgesehen, wodurch sich ein konstantes Spaltmaß zwischen dem Rand des Kragenabschnittes 14 und der ersten Einprägung 33 des Karosserieaußenhautteiles 3 einstellt. Es können jedoch auch mehr oder weniger Fixiernasen 34 vorgesehen werden.

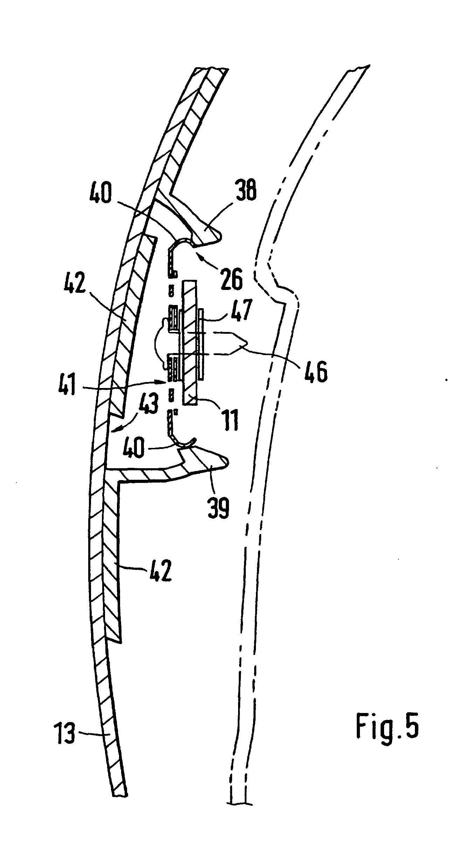

Jede Schnappverbindung 26 umfaßt zwei beabstandet angeordnete Haltenasen 38, 39, die seitlich abgestellte gerundete Federzungen 40 einer Halteklammer 41 bereichsweise umgreifen (Fig. 5). Sämtliche Haltenasen 38, 39 der Schnappverbindungen 26 sind an einer separaten Halteleiste 42 ausgebildet, die durch Ultraschallschweißung mit der Rückseite des Kragenabschnitts 14 verbunden ist. Die Halteleiste 42 erstreckt sich entlang des vorderen aufrechten Bereiches sowie im oberen und unteren Bereich des Kragenabschnittes 14. Jeweils zwei beabstandete Haltenasen 38, 39 sind einander zugewandt. Jede Haltenase 38, 39 ist über zwei nicht näher dargestellte seitliche Stege an den Boden der Halteleiste 42 angeschlossen. Die Halteleiste 42 ist im Anschlußbereich der seitlichen Stege örtlich mit einer Aussparung 43 versehen. Jede Halteklammer 41 ist mit einem U-förmigen Abschnitt 44 auf eine zungenförmige, in die Öffnung 10 hineinragende Anformung 45 des Karosserieaußenhautteiles 3 aufgesteckt, wobei die Anformungen 45 in Verlängerung der zweiten stufenförmigen Einprägung 37 verlaufen. Durch eine zentrale Bohrung jeder Halteklammer 41 kann zur Befestigung des Kanals 11 eine Befestigungsschraube 46 hindurchgeführt werden, die in eine Gewindemutter 47 eindrehbar ist.

Bei der Montage der Luftführungshutze 13 wird der spitzwinkelige hintere Bereich auf den hinteren Rand der Öffnung 10 aufgesetzt und danach wird die Luftführungshutze 13 nach schräg hinten geschoben. Anschließend erfolgt ein seitliches Andrücken des vorderen Bereichs der Luftführungshutze 13 nach innen, wodurch die Schnappverbindungen 26 gebildet werden.

## Patentansprüche

1. Fahrzeug mit einer Luftführungshutze (13), die von der Fahrzeugaußenseite her in eine Öffnung (10) eines Karosserieaußenhautteiles(3) eingesetzt ist und sich über einen umlaufenden Kragenabschnitt (14) an der Außenseite(15) des Karosserieaußenhautteiles (3) abstützt, wobei vom äußeren Kragenabschnitt (14) ein in einen dahinterliegenden Karosseriehohlraum ragender Stutzenabschnitt (17) weggeführt ist, der mit seinem freien Ende (18) an einen angrenzenden geschlossenen Kanal (11) angeschlossen ist, **dadurch gekennzeichnet, dass** das freie Ende (18) des Stutzenabschnitts (17) der Luftführungshutze (13) in einen aufgeweiteten Aufnahmeabschnitt (19) des angrenzenden Kanals (11) eingesteckt ist, wobei zwischen dem Stutzenabschnitt (17) und dem außenliegenden Aufnahmeabschnitt (19) ein umlaufender Dichtkörper (20) zwischengeschaltet ist, dass die Luftführungshutze (13) über zumindest ein Federelement (25) und wenigstens eine Schnappverbindung (26) am Karosserieaußenhautteil (3) festlegbar ist, dass der Kragenabschnitt (14) der Luftführungshutze (13) an einer ersten umlaufenden stufenförmigen Einprägung (33) des die Öffnung (10) umgebenden Karosserieaußenhautteiles (3) abschnittsweise aufliegt und dass an der Luftführungshutze (13) örtlich vorstehende Fixiernasen (34) angeordnet sind, die sich mit freien Enden (35) an einer zweiten stufenförmigen Einprägung (37) der Karosserieaußenhaut (3) abstützen und die Luftführungshutze (13) in Einbaulage positionieren.

2. Fahrzeug nach Anspruch 1, **dadurch gekennzeichnet, dass** der rohrförmige Stutzenabschnitt (17) der Luftführungshutze (13) spitzwinkelig an den hinteren aufrechten Kragenabschnitt (14) angeschlossen ist.

3. Fahrzeug nach Anspruch 1, **dadurch gekennzeichnet, dass** jede Schnappverbindung (26) zwei beabstandet angeordnete Haltenasen (38, 39) umfasst, die seitlich abgestellte gerundete Federzungen (40) einer Halteklammer (41) bereichsweise umgreifen.

4. Fahrzeug nach Anspruch 3, **dadurch gekennzeichnet, dass** sämtliche Haltenasen (38, 39) der Schnappverbindungen (26) an einer separaten Halteleiste (42) ausgebildet sind, die durch Ultraschallschweißung mit der Rückseite des Kragenabschnitts (14) verbunden ist.

5. Fahrzeug nach Anspruch 3, **dadurch gekennzeichnet, dass** die Halteklammern (41) mit U-förmigen Abschnitten (44) auf zungenförmige, in die Öffnung (10) hineinragende Anformungen (45) des Karosserieaußenhautteiles (3) aufgesteckt sind.

6. Fahrzeug nach Anspruch 1, **dadurch gekennzeichnet, dass** auf das freie Ende des dem Karosserieaußenhautteiles (3) zugekehrten Wandabschnittes (27) des Stutzenabschnitts (17) zumindest ein Federelement (25) aufgesteckt ist, das sich mit seinem abgebogenen freien Ende (30) an der Innenseite (31) des Karosserieaußenhautteiles (3) unter Vorspannung abstützt.

7. Fahrzeug nach Anspruch 6, **dadurch gekennzeichnet, dass** mehrere übereinanderliegend angeordnete Federelemente (25) am Wandabschnitt (27) des Stutzenabschnitts (17) vorgesehen sind.

## Claims

1. A vehicle with an air intake scoop (13) which is inserted from the outside of the vehicle into an opening (10) in a body outer skin part (3) and is supported against the outside (15) of the body outer skin part (3) by a circumferential collar portion (14), wherein a connecting portion (17) extends away from the outer collar portion (14) and projects into a body cavity lying therebehind and is connected by its free end (18) to an adjacent closed duct (11), **characterised in that** the free end (18) of the connecting portion (17) of the air intake scoop (13) is inserted into a widened receiving portion (19) of the adjacent duct (11), wherein a circumferential sealing member (20) is interposed between the connecting portion (17) and the outer receiving portion (19), **in that** the air intake scoop (13) is securable to the body outer skin part (3) by at least one spring member (25) and at least one snap-locking connection (26), **in that** the collar portion (14) of the air intake scoop (13) partly rests against a first circumferential step-type impression (33) in the body outer skin part (3) surrounding the opening (10), and **in that** locally projecting fixing lugs (34) are arranged on the air intake scoop (13) and are supported by free ends (35) against a second step-type impression (37) in the body outer skin part (3) and position the air intake scoop (13) in its mounted position.

2. A vehicle according to claim 1, **characterised in that** the tubular connecting portion (17) of the air intake scoop (13) is connected at an acute angle to the rear upright collar portion (14).

3. A vehicle according to claim 1, **characterised in that** each snap-locking connection (26) comprises two spaced retaining lugs (38, 39) which partly engage round laterally offset, rounded spring tongues (40) of a retaining clip (41).

4. A vehicle according to claim 3, **characterised in that** all the retaining lugs (38, 39) of the snap-locking connections (26) are formed on a separate retaining strip (42) which is connected to the rear surface of the collar portion (14) by ultrasonic welding.

5. A vehicle according to claim 3, **characterised in that** the retaining clips (41) have U-shaped portions (44) which are pushed onto tongue-shaped formations (45) of the body outer skin part (3), the formations (45) projecting into the opening (10).

6. A vehicle according to claim 1, **characterised in that** at least one spring member (25) is pushed onto the free end of the wall portion (27) of the connecting portion (17) and is supported under prestress by its bent free end (30) against the inside (31) of the body outer skin part (3), the wall portion (27) facing the body outer skin part (3).

7. A vehicle according to claim 6, **characterised in that** a plurality of spring members (25) arranged one above the other are provided on the wall portion (27) of the connecting portion (17).

## Revendications

1. Véhicule avec une garniture d'entrée d'air (13), que l'on insère par une face extérieure du véhicule dans une ouverture (10) d'une partie de revêtement extérieur de carrosserie (3) et qui par une section périphérique de collerette (14) s'appuie sur la face extérieure (15) de la partie de revêtement extérieur de carrosserie (3), un tronçon de manchon (17) saillant dans une cavité de carrosserie située derrière ce dernier, qui par son extrémité libre (18) est raccordé sur un conduit fermé adjacent (11) partant de la section extérieure de collerette (14), **caractérisé en ce que** l'extrémité libre (18) du tronçon de manchon (17) de la garniture d'entrée d'air (13) est insérée dans une section de logement élargie (19) du conduit adjacent (11), un élément d'étanchéité périphérique (20) étant monté entre le tronçon de manchon (17) et la section de logement extérieure (19), **en ce que** la garniture d'entrée d'air (13) peut être positionnée sur la partie de revêtement extérieur de carrosserie (3) par l'intermédiaire d'au moins un élément élastique (25) et d'au moins une liaison par enclenchement (26), **en ce que** la section de collerette (14) de la garniture (13) s'appuie par sections sur une première empreinte périphérique échelonnée (33) de la partie de revêtement extérieur de carrosserie (3) entourant l'ouverture (10) et **en ce que** des crampons de retenue (34) localement saillants, qui par leur extrémité libre (35) s'appuient sur une deuxième empreinte échelonnée (37) du revêtement extérieur de carrosserie (3) et qui positionnent la garniture d'entrée d'air (13) dans sa position de montage sont disposés sur la garniture (13).

2. Véhicule selon la revendication 1, **caractérisé en ce que** le tronçon tubulaire de manchon (17) de la garniture (13) est raccordé en angle aigu sur la section arrière verticale de collerette (14).

3. Véhicule selon la revendication 1, **caractérisé en ce que** chaque liaison par enclenchement (26) comprend deux crampons de retenue (38, 39) distancés, qui entourent par endroits des languettes résilientes arrondies (40) latéralement déportées d'un crampon de maintien (41).

4. Véhicule selon la revendication 3, **caractérisé en ce que** tous les crampons de retenue (38, 39) des liaisons par enclenchement (26) sont conçus sur une baguette de retenue (42) séparée, qui est reliée par soudure aux ultrasons avec la face arrière de la section de collerette (14).

5. Véhicule selon la revendication 3, **caractérisé en ce que** par des sections en formes de U (44), les crampons de maintien (41) sont emboîtés sur des moulages (45) en forme de languettes, saillant dans l'ouverture (10) de la partie de revêtement extérieur de carrosserie (3).

6. Véhicule selon la revendication 1, **caractérisé en ce qu'**au moins un élément élastique (25) qui par son extrémité libre recourbée (30) s'appuie sous précontrainte sur la face intérieure (31) de la partie et de revêtement extérieur de carrosserie (3) est emboîté sur l'extrémité libre de la partie de paroi (27) du tronçon de manchon (17).

7. Véhicule selon la revendication 6, **caractérisé en ce qu'**on a prévu plusieurs éléments élastique superposés (25) sur la partie de paroi (27) du tronçon de manchon (17).
